(19) Europäisches Patentamt
European Patent Office
Office européen des brevets

(11) **EP 1 600 958 B1**

(12) **EUROPEAN PATENT SPECIFICATION**

(45) Date of publication and mention
of the grant of the patent:
**10.06.2009 Bulletin 2009/24**

(51) Int Cl.:
***G11B 7/135*** *(2006.01)*

(21) Application number: **05251051.8**

(22) Date of filing: **23.02.2005**

(54) **Optical pickup unit requiring no phase adjustment**

Optische Abtastkopfeinheit keine Phasenkorrektur benötigend

Unité de balayage optique ne nécessitant pas de réglage des phases

(84) Designated Contracting States:
**DE FR NL**

(30) Priority: **26.05.2004 JP 2004155563**

(43) Date of publication of application:
**30.11.2005 Bulletin 2005/48**

(73) Proprietor: **Mitsumi Electric Co., Ltd.**
**Tama-Shi,**
**Tokyo (JP)**

(72) Inventor: **Takeuchi, Toshio,**
**Mitsumi Electric Co., Ltd.**
**Tama-shi,**
**Tokyo (JP)**

(74) Representative: **Haley, Stephen**
**Gill Jennings & Every LLP**
**Broadgate House**
**7 Eldon Street**
**London EC2M 7LH (GB)**

(56) References cited:
EP-A1- 0 621 590        US-A1- 2001 033 530
US-A1- 2003 151 989     US-B1- 6 370 092
US-B1- 6 738 326

EP 1 600 958 B1

## Description

This invention relates to an optical pickup unit for recording/reproducing data in/from an optical recording medium (an optical disc) and, in particular, to improvement of the optical pickup unit which adopts a DPP method as a tracking servo method.

The optical pickup unit is a unit for recording/reproducing data in/from the optical disc. There are, as optical discs, DVDs (digital versatile discs or digital video discs), CDs (compact discs), and so on. There are, as the CDs, a CD-R (compact disc-recordable), a CD-RW (CD-rewritable), and so on. The CD-R is a writable CD which can record only one time. The CD-RW is a rewritable CD using a phase-change recording system. There are, as the DVDs, DVD-R (DVD Recordable), DVD-RAM, DVD+RW (DVD+Rewritable), DVD-RW (DEV Rewritable), and so on. The DVD-R is a writable DVD which can record only one time. The DVD-RAM is a rewritable version of the DVD.

It is necessary for the optical pickup unit of the type described to irradiate a laser beam produced by an optical source on a predetermined track of the optical disc. For such tracking control, tracking servo methods using three beams are used up to now. In the manner known in the art, the tracking servo methods using three beams are classified into two kinds of methods: a three beam method and a DPP (differential push-pull) method according to difference between methods of generating a tracking error signal. Both of the three beam method and the DPP method divide the laser beam produced by the optical source by a diffraction grating into three beams which consists of a zero-order diffracted beam and a pair of first-order diffracted beams. The zero-order diffracted beam is called a main beam while the pair of first-order diffracted beams are called sub beams. In the pair of first-order diffracted beams, one crossing the track first is called a leading sub beam while another crossing the track later is called a trailing sub beam. Among the instant specification, the leading sub beam is called a first sub beam while the trailing sub beam is called a second sub beam.

In the three beam method, the leading sub beam and the trailing sub beam are disposed so that a phase difference therebetween becomes 180 degrees in terms of a phase of a track crossing signal. In addition, in the three beam method, a track error signal is generated by subtracting a signal (a received signal of a photo-detector) due to a spot of the trailing sub beam from another signal (another received signal of the photo-detector) due to another spot of the leading sub beam. As a result, it is possible to stably reproduce a recorded medium (an optical disc). Such a three beam method is used in a case of reproducing a CD (compact disc).

In the three beam method, technique where optical discs having different track pitches are recorded or reproduced by a common optical head is known (see e.g. Japanese Unexamined Patent Application Publication No. H08-221774 or JP-A 08-221774).

On the other hand, in the DPP method, a push-pull signal due to a spot of the leading sub beam is called a leading sub push-pull signal, a push-pull signal due to a spot of the trailing sub beam is called a trailing sub push-pull signal, and a push-pull signal due to a spot of the main beam is called a main push-pull signal. A tracking error signal is generated by subtracting an added signal obtained by adding the leading sub push-pull signal and the trailing sub push-pull signal from the main push-pull signal. In the DPP method, it is necessary to dispose the leading sub beam and the trailing sub beam so that a phase difference therebetween becomes 360 degrees in terms of a phase of the track crossing signal.

In such a DPP method, it is possible to remain only a push-pull signal as the tracking error signal by subtracting the added signal obtained by adding the leading sub push-pull signal and the trailing sub push-pull signal from the main push-pull signal. As a result, the DPP method is advantageous in that it is possible to cancel a offset component of the push-pull signal caused by a tilt of the optical disc and a shift of an objective lens.

On the other hand, in DVD apparatuses, there is one in which a particular optical pickup unit is mounted in order to enable to record/reproduce data in/from both of the DVD and the CD. The particular optical pickup unit of the type is for carrying out recording or reproducing by selectively using two kinds of laser beams, namely, a laser beam having a short wavelength (wavelength band of 650 nm) for the DVD and a laser beam having a long wavelength (wavelength band of 780 nm). The particular optical pickup unit is called a two-wavelength handling optical pickup unit. Such a two-wavelength handling optical pickup unit is disclosed in Japanese Unexamined Patent Application Publication No. 2001-195767 or JP-A 2001-195767.

In the manner which is known in the art, a track pitch is different between the CD and the DVD. Accordingly, in a conventional optical pickup unit, it is necessary to adjust a phase between the leading sub beam and the trailing sub beam by rotating a diffraction grating around an optical axis in accordance with the type of the optical disc.

That is, in the conventional pickup unit which adopts the DPP method as the tracking servo method, it is necessary to adjust the phase by mounting the diffraction grating operating at various wavelengths in accordance with the type of the optical discs in order to obtain a stable tracking error signal for the optical discs having different track pitches.

In the manner which is described above, it is necessary for the conventional optical pickup unit to make a phase adjustment so that the phase difference between the leading sub beam (the first sub beam) and the trailing sub beam (the second sub beam) becomes 360 degrees in terms of the phase of the track crossing signal. Specifically, in the two-wavelength handling optical pickup unit, the above-mentioned phase adjustment must be carried out in accordance with the type of the optical discs in order to obtain the stable tracking error signal (DPP signal) for the optical discs having the different track pitches.

Further background information can be found in the following documents: US-B-6370092 cf. the preamble of claims 1 and 2 relates to an optical pickup and optical disc device for use with a high density optical pickup; US-B-6738326 relates to an apparatus and method for reproducing information from two types of optical discs having discrimination marks formed along tracks thereof; and EP-A-0621590 relates to an optical information rewording and/or reproducing apparatus.

It is therefore an object of this invention to provide an optical pickup unit which requires no phase adjustment for a phase difference between a leading sub beam (a first sub beam) and a trailing sub beam (a second sub beam).

It is another object of this invention to provide an optical pickup unit which requires no phase adjustment even if a type of optical discs is different.

It is still another object of this invention to provide an optical pickup unit which is capable of obtaining a stable tracking error signal for optical discs having different track pitches.

Other objects of this invention will become clear as the description proceeds.

According to the present invention there is provided a diffraction grating for separating an incident beam from an optical source into a main beam and first and second sub beams, wherein each of said first and said second sub beams has, in use, on an optical disc, an elliptic spot shape which becomes longer in a radial direction of the optical disc and which, in use, spans at least two tracks, the diffraction grating being characterized by having at least one curved pattern where a plurality of curved grooves having the same radius are equidistantly placed.

Alternatively, the diffraction grating may have a repetition pattern so that a partial curved pattern is repeated plural times in a predetermined direction. The partial curved pattern has a plurality of curved grooves having the same shape which are equidistantly placed.

According to the present invention there is also provided a combination of an optical disc and an optical pickup unit comprising a diffraction grating as described above.

Furthermore, the optical pickup unit may be an optical pickup unit which enables to record or reproduce to first and second optical discs. The first and the second optical disc have track pitches and using wavelengths both of which are different to each other. The optical pickup unit comprises a photodetector for detecting a return beam reflected by each of the first and the second optical discs. The photodetector may comprise a quadripartite photodiode for receiving the main beam, a first tripartite photodiode for receiving the first sub beam, and a second tripartite photodiode for receiving the second sub beam.

In the Drawings;

Fig. 1 is a view for use in describing an optical system of a conventional optical pickup unit;

Fig. 2 is a front view showing a conventional diffraction grating for use in the conventional optical pickup unit illustrated in Fig. 1;

Fig. 3 is a view showing a state where a laser beam radiated by the conventional optical pickup unit comprising the conventional diffraction grating is converged and irradiated on an information recording face of an optical disc;

Fig. 4 is a view showing structure of a photodetector for use in the conventional optical pickup unit illustrated in Fig. 1 and shapes of a return beam;

Fig. 5A is a view showing a waveform of a leading push-pull signal received by the photodetector illustrated in Fig. 4;

Fig. 5B is a view showing a waveform of a main push-pull signal received by the photodetector illustrated in Fig. 4;

Fig. 5C is a view showing a waveform of a trailing push-pull signal received by the photodetector illustrated in Fig. 4;

Fig. 5D is a view showing a tracking error signal generated by adding and subtracting the push-pull signals;

Fig. 6 is a view for use in describing an optical system of an optical pickup unit according to an embodiment of this invention;

Fig. 7 is a front view showing a diffraction grating for use in the optical pickup unit illustrated in Fig. 6;

Fig. 8 is a view showing a state where a laser beam radiated by the optical pickup unit comprising the diffraction grating illustrated in Fig. 7 is converged and irradiated on an information recording face of an optical disc;

Fig. 9 is a view showing structure of a photodetector for use in the optical pickup unit illustrated in Fig. 6 and shapes of a return beam;

Fig. 10A is a view showing a waveform of a leading push-pull signal received by the photodetector illustrated in Fig. 9;

Fig. 10B is a view showing a waveform of a main push-pull signal received by the photodetector illustrated in Fig. 9;

Fig. 10C is a view showing a waveform of a trailing push-pull signal received by the photodetector illustrated in Fig. 9;

Fig. 10D is a view showing a tracking error signal generated by adding and subtracting the push-pull signals;

Fig. 11 is a view showing a region of a laser beam where an objective lens uses in the diffraction grating according to an embodiment of this invention;

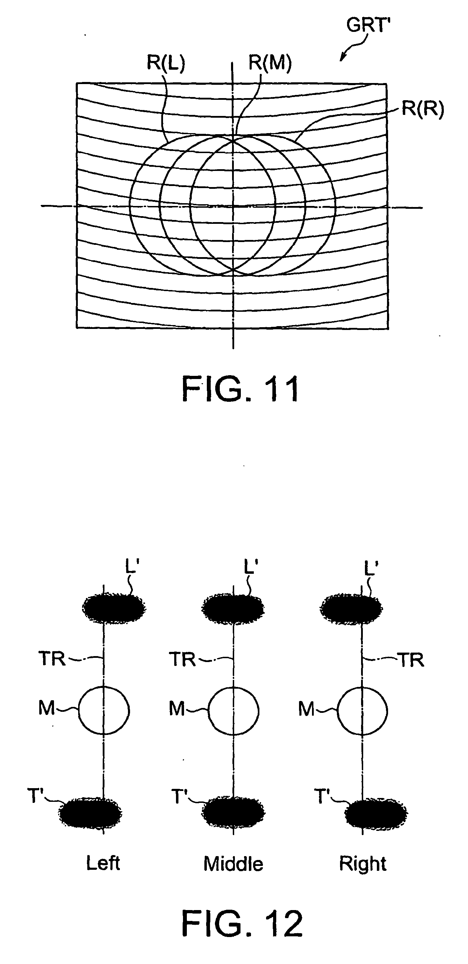

Fig. 12 is views showing states of spots of the laser beam on an information recording face of an optical disc where the laser is converged and

irradiated through the objective lens in the optical pickup unit comprising the diffraction grating illustrated in Fig. 11;

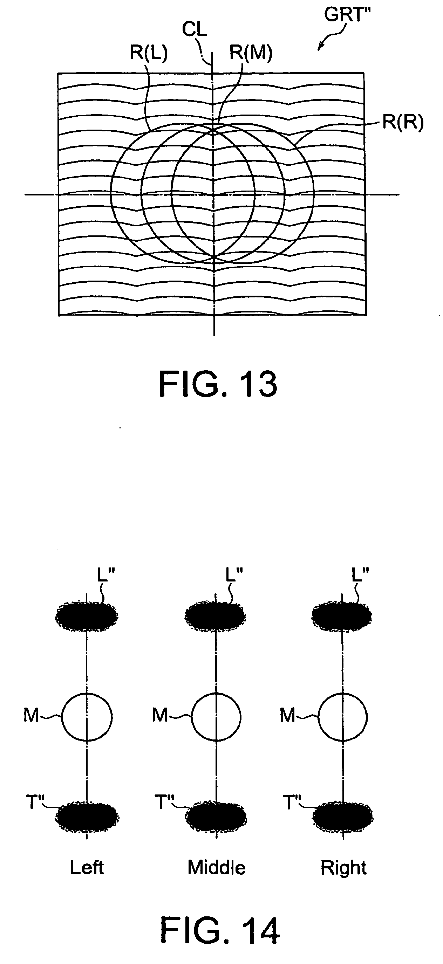

Fig. 13 is a view showing a diffraction grating according to another embodiment of this invention and a region of a laser beam where an objective lens uses in the diffraction grating;

Fig. 14 is views showing states of spots of the laser beam on an information recording face of an optical disc where the laser is converged and irradiated through the objective lens in the optical pickup unit comprising the diffraction grating illustrated in Fig. 13; and

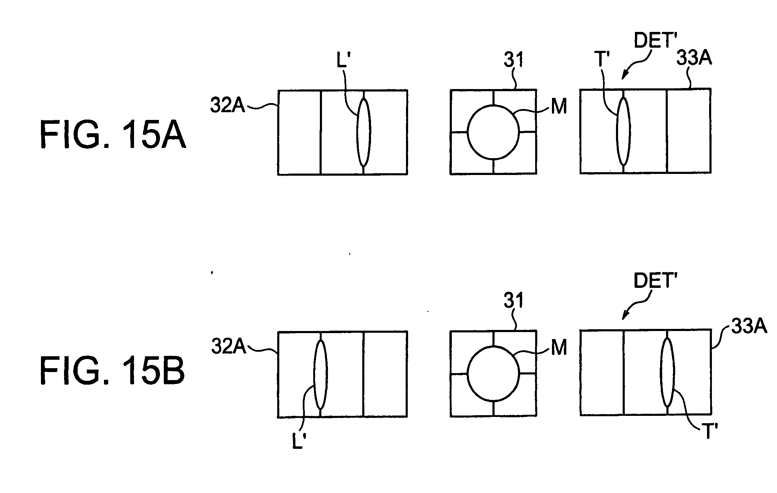

Figs. 15A and 15B show structure of a photodetector for use in a two-wavelength handling optical pickup unit according to this invention and shapes of a return beam.

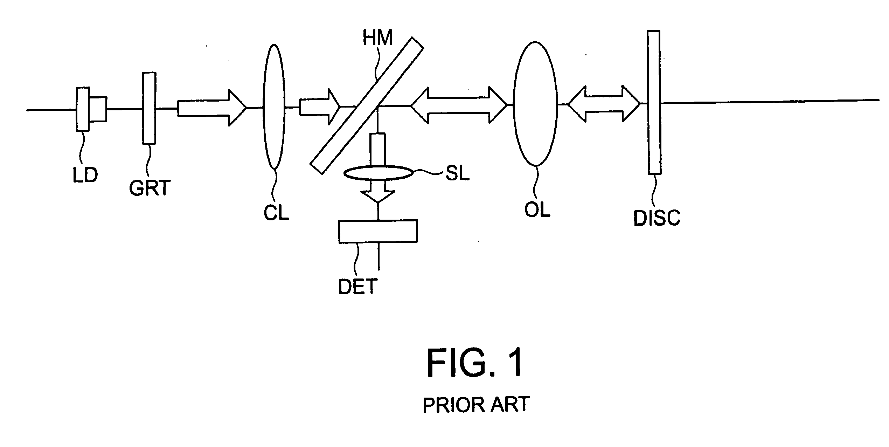

Referring to Fig. 1, a conventional optical pickup unit adopting a DPP (differential push-pull) method will be described at first in order to facilitate an understanding of the present invention. Fig. 1 is a view showing an optical system of the conventional optical pickup unit.

The illustrated optical pickup unit comprises a semiconductor laser (laser diode) LD as an optical source, a diffraction grating GRT, a collimator lens CL, a half mirror HM, an objective lens OL, a converging lens (sensor lens) SL, and a photodetector (light receiving element) DET. In addition, a reference symbol of DISC designates an optical disc.

In the optical pickup unit with such a structure, the laser diode LD radiates a laser beam having a predetermined wavelength. The diffraction grating GRT separates the outgoing laser beam from the laser diode LD into three laser beams. In the manner which is described above, among the three laser beams, a center beam or a zero-order diffracted beam is called a main beam while two both side beams or a pair of first-order diffracted beams are called sub beams (a leading sub beam and a trailing sub beam). The collimator lens CL collimates the three laser beams from the diffraction grating GRT into a collimated beam. The half mirror HM transmits the collimated beam from the collimator lens CL and reflects a return beam (a reflected beam from the optical disc DISC) which will later be described. The objective lens OL converges the laser beam transmitted through the half mirror HM on an information recording face of the optical disc DISC. Reflected by the optical disc DISC, the reflected beam is incident to the half mirror HM as the return beam. Reflected by the half mirror HM, the return beam is converged and subjected astigmatism by the converging lens SL and is delivered to the photodetector DET which generates an electric signal in accordance with an optical strength thereof.

Now, description will be made as regards operation of the conventional optical pickup unit shown in Fig. 1. Radiated by the laser diode LD, the laser beam is separated into the three laser beams by the diffraction grating GRT, is converted into the collimated beam by the collimator lens CL, and is incident to the half mirror HM. The half mirror HM transmits the incident collimated beam. The transmitted beam is converged by the objective lens OL and is irradiated on the information recording face of the optical disc DISC.

The optical disc DISC reflects the irradiated beam in accordance with information (pits) formed on the information recording face. Reflected by the information recording face, the reflected beam transmits the objective lens OL and is incident to the half mirror HM as the return beam. The incident return beam is reflected by the half mirror HM, is converged and subjected astigmatism by the converging lens SL, and is detected by the photodetector DET. The photodetector DET converts the detected beam into the electric signal.

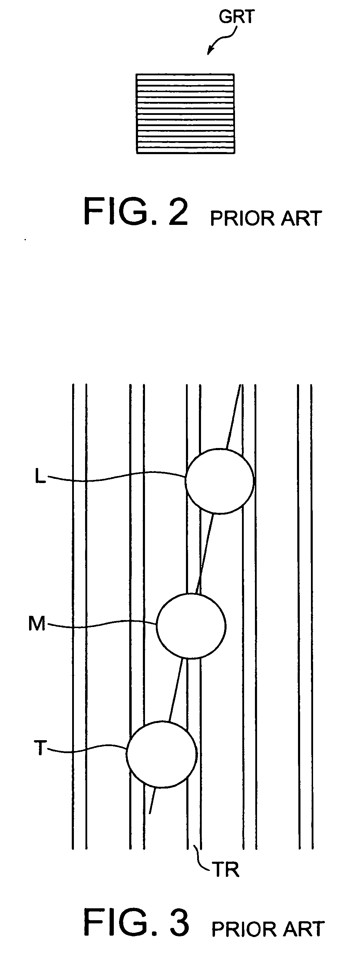

Fig. 2 shows a conventional diffraction grating GRT for use in the conventional optical pickup unit illustrated in Fig. 1. The conventional diffraction grating GRT has a GRT pattern where a plurality of linear grooves are equidistantly placed.

Fig. 3 shows a state of spots where the leaser beam radiated by the conventional optical pickup unit comprising the conventional diffraction grating GRT is converged and irradiated on the information recording face of the optical disc DISC. On the information recording face of the optical disc DISC, a plurality of tracks TR are formed. In each track, a plurality of pits are formed. An interval between adjacent tracks TR is called a track pitch. By scanning the main beam M on the track, reproduction of the optical disc DISC is carried out.

The leading sub beam L and the trailing sub beam T are symmetrically placed with respect to the main beam M with a space left in a direction along the track TR and in a direction normal to the track TR. In the manner which is described above, in the DPP method, the leading sub beam L and the trailing sub beam T are arranged so that a phase difference therebetween becomes 360 degrees in terms of a phase of a track crossing signal. In order to make them such an arrangement, it is necessary to carry out a phase matching by rotating the diffracting grating GRT around an optical axis of the laser beam.

In the conventional optical pickup unit using the conventional diffracting grating GRT shown in Fig. 2, each of the main beam M, the leading sub beam L, and the trailing sub beam T has a circular spot shape on the information recording face of the optical disc DISC.

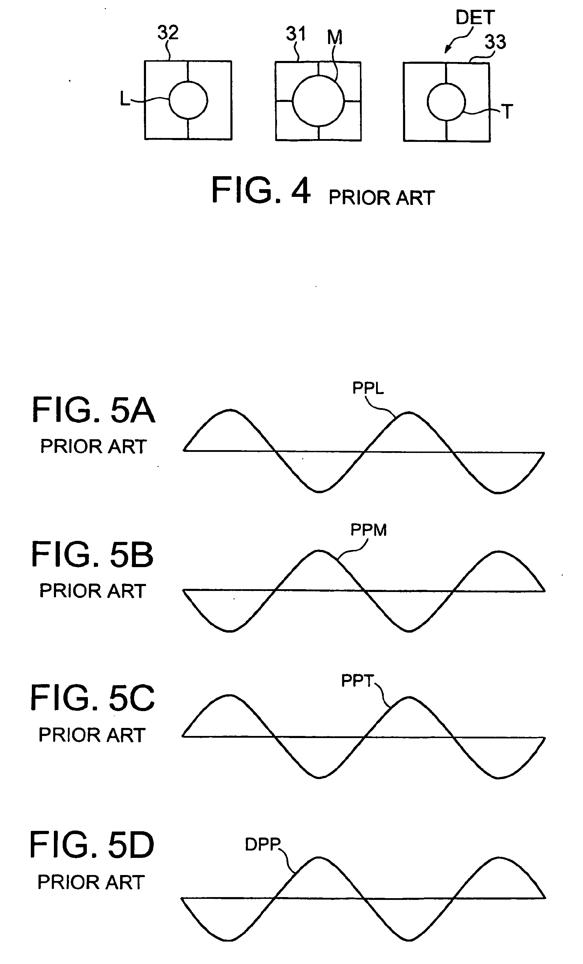

Fig. 4 shows structure of the photodetector DET for use in the conventional optical pickup unit illustrated in Fig. 1 and shapes of the return beam. The illustrated photodetector DET comprises a quadripartite photodiode 31 for receiving the main beam M, a first bipartite photodiode 32 for receiving the leading sub beam L, and a second bipartite photodiode 33 for receiving the trailing sub beam T.

In addition, the photodetector DET illustrated in Fig. 4 shows structure in a case where a focus error signal is generated by using a known astigmatism method using the main beam M.

As shown in Fig. 4, received by the photodetector DET, the return beam of the main beam M, the leading sub beam L, and the trailing sub beam T has a circular shape.

Figs. 5A, 5B, 5C, and 5D show a leading push-pull signal PPL, a main push-pull signal PPM, a trailing push-pull signal PPT, and a tracking error signal DPP, respectively. The leading push-pull signal PPL, the main push-pull signal PPM, and the trailing push-pull signal are received by the photodetector DET illustrated in Fig. 4. The tracking error signal DPP is generated by adding and subtracting their push-pull signals PPL, PPM, and PPT. That is, the tracking error signal DPP is calculated by a following equation:

$$DPP = PPM - K(PPL + PPT),$$

where K represents a constant for compensating an optical strength difference between the main beam and the sub beams. Specifically, the tracking error signal DPP is obtained by multiplying the constant K by a signal obtained by adding the leading push-pull signal PPL and the trailing push-pull signal PPT and by subtracting a multiplied signal from the main push-pull signal PPM.

In the manner which is known in the art, a track pitch is different between the CD and the DVD. Accordingly, in the conventional optical pickup unit, it is necessary to match a phase between the leading sub beam L and the trailing sub beam T by rotating the diffraction grating GRT around the optical axis in accordance with the type of the optical disc DISC.

That is, in the conventional pickup unit which adopts the DPP method as the tracking servo method, it is necessary to adjust the phase by mounting the diffraction grating operating at various wavelengths in accordance with the type of the optical discs in order to obtain a stable tracking error signal DDP for the optical discs having different track pitches.

In the manner which is described above, it is necessary for the conventional optical pickup unit to make a phase adjustment so that the phase difference between the leading sub beam (the first sub beam) L and the trailing sub beam (the second sub beam) T becomes 360 degrees in terms of the phase of the track crossing signal. Specifically, in the two-wavelength handling optical pickup unit, the above-mentioned phase adjustment must be carried out in accordance with the type of the optical discs in order to obtain the stable tracking error signal DPP for the optical discs having the different track pitches, as mentioned in the preamble of the instant specification.

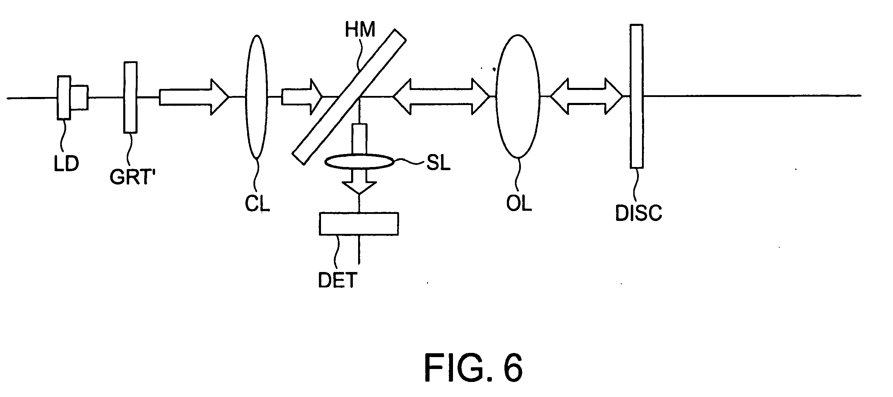

Referring to Fig. 6, the description will proceed to an optical pickup unit according to an embodiment of this invention. Fig. 6 is a system structure view of an optical system of the optical pickup unit.

The illustrated optical pickup unit is similar in structure and operation to the conventional optical pickup unit illustrated in Fig. 1 except that the diffraction grating is different from that illustrated in Fig. 1 as will later become clear. The diffraction grating is therefore depicted at GRT'. In addition, the same reference symbols are attached to components similar to those illustrated in Fig. 1 and their description will be omitted for purposes of simplification of the description.

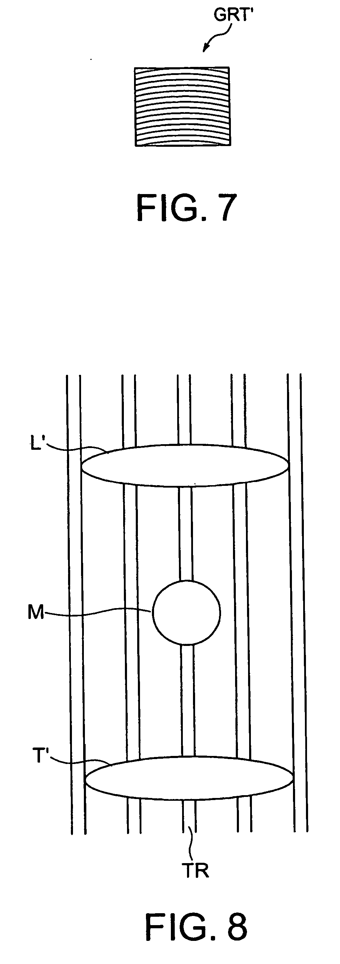

Fig. 7 shows structure of the diffraction grating GRT' for use in the optical pickup unit illustrated in Fig. 6. The diffraction grating GRT' has an arc pattern where a plurality of arc grooves are equidistantly placed. It is noted that the arc grooves have the same radius but are not concentric circles.

Although the diffraction grating GRT' has the arc pattern where the arc grooves having the same radius are equidistantly placed, the diffraction grating GRT' may have a hyperbolic pattern where a plurality of hyperbolic grooves are equidistantly placed or a parabolic pattern where a plurality of parabolic grooves are equidistantly placed in lieu of the arc pattern. In other words, the diffraction grating GRT' may have a curved pattern where a plurality of curved grooves having the same shape are equidistantly placed. When the hyperbolic pattern or the parabolic pattern are formed in the diffraction grating, it is possible to control strength distribution in the spots of the sub beams on the optical disc.

Fig. 8 shows a state of spots where the laser beam radiated by the optical pickup unit according to this invention comprising the diffraction grating GRT' illustrated in Fig. 7 is converged and irradiated on the information recording face of the optical disc DISC. A leading sub beam L' and a trailing sub beam T' are symmetrically placed with respect to the main beam M with a space left in a direction along the track TR.

In the optical pickup unit according to this invention using the diffracting grating GRT' shown in Fig. 7, the main beam M has a circular spot shape on the information recording face of the optical disc DISC while each of the leading sub beam L' and the trailing sub beam T' has, on the information recording face of the optical disc DISC, an elliptic spot shape which becomes longer in a radial direction of the optical disc DISC and which spans a plurality of tracks. In the example being illustrated, although the elliptic spot in each of the leading sub beam L' and the trailing sub beam T' spans three tracks, the elliptic spot may span at least two tracks.

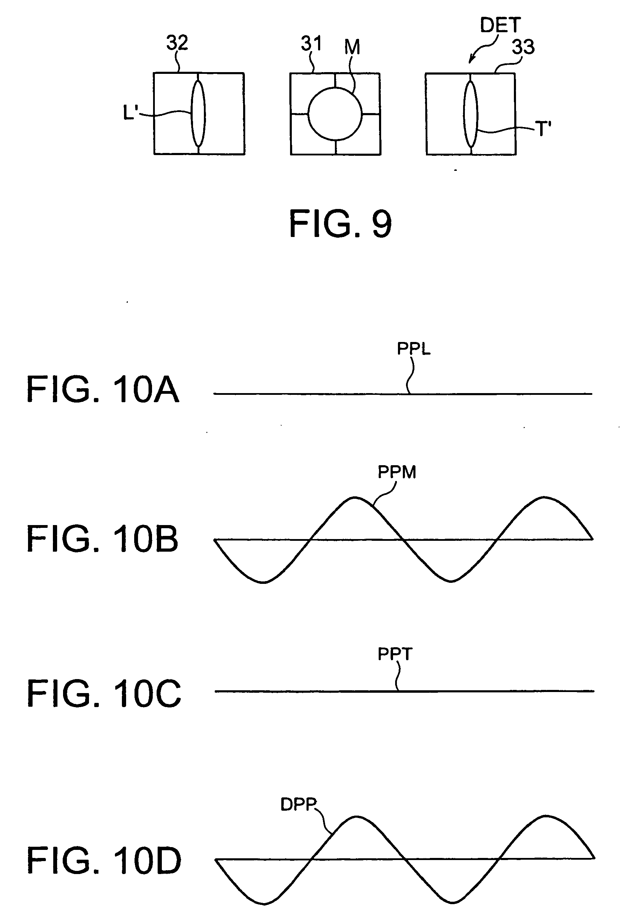

Fig. 9 shows structure of the photodetector DET for use in the optical pickup unit illustrated in Fig. 6 and shapes of the return beam. The illustrated photodetector DET has similar in structure to the photodetector DET illustrated in Fig. 4. The photodetector DET illustrated in Fig. 9 shows structure in a case where a focus error signal is generated by using a known astigmatism method using the main beam M.

As shown in Fig. 4, it is understood that, received by the photodetector DET, the return beam of the main beam M has a circular shape while the return beam of each of the leading sub beam L and the trailing sub beam T has an elliptic shape.

Figs. 10A, 10B, 10C, and 10D show a leading push-pull signal PPL, a main push-pull signal PPM, a trailing push-pull signal PPT, and a tracking error signal DPP, respectively. The leading push-pull signal PPL, the main push-pull signal PPM, and the trailing push-pull signal are received by the photodetector DET illustrated in Fig. 9. The tracking error signal DPP is generated by adding and subtracting their push-pull signals PPL, PPM, and PPT.

As shown in Figs. 10A and 10C, it is understood that, in the sub beams each having the elliptic spot spanning at least two tracks, there is no track crossing component in both of the leading and the trailing push-pull signals PPL and PPT. As a result, no angular adjustment is required in the diffraction grating GRT' although such an angular adjustment is required in the conventional diffraction grating GRT of the conventional optical pickup unit. That is, no rotational adjustment of the diffraction grating GRT' is required unaffected by the track pitch of the optical disc (medium) DISC.

In addition, the tracking error signal DPP is calculated by a following equation:

$$DPP = PPM - K(PPL + PPT),$$

where K represents a constant for compensating an optical strength difference between the main beam and the sub beams. Specifically, the tracking error signal DPP is obtained by multiplying the constant K by a signal obtained by adding the leading push-pull signal PPL and the trailing push-pull signal PPT and by subtracting a multiplied signal from the main push-pull signal PPM.

Fig. 11 shows a region of the laser beam where the objective lens OL uses in the diffraction grating GRT' according to an embodiment of this invention. Fig. 12 shows states of spots of the laser beam on the information recording face of the optical disc DISC where the laser beam is converged and irradiated through the objective lens OL in the optical pickup unit comprising the diffraction grating GRT' illustrated in Fig. 11.

In the manner which is known in the art, the objective lens OL enables to shift leftward and rightward with respect to an optical base for tracking control. With such a shift of the objective lens OL, the region of the laser beam used by the diffraction grating GRT' shifts between a right-hand region R(R) and a left-hand region R(L) through a middle region R(M), as shown in Fig. 11.

In Fig. 12, a middle view shows a state of spots of the laser beam on the information recording face of the optical disc DISC when the objective lens OL does not shift, a right-hand view shows a state of spots of the laser beam on the information recording face of the optical disc DISC when the objective lens OL shifts the rightward, and a left-hand view shows a state of spots of the laser beam on the information recording face of the optical disc DISC when the objective lens OL shifts the leftward.

As shown in Fig. 12, it is understood that the leading sub beam L' and the trailing sub beam T' are symmetrically placed around the main beam M although the objective lens OL shifts the leftward or the rightward. When the objective lens OL shift the rightward, the leading sub beam L' and the trailing sub beam T' rotates in a counterclockwise around the main beam M. Likewise, when the objective lens OL shifts the leftward, the leading sub beam L' and the trailing sub beam T' rotates in a clockwise around the main beam M.

This reason is as follows. It will be assumed that the objective lens OL does not shift. In this event, a used region of the laser beam in the diffraction grating GRT' becomes the middle region R(M) in the diffraction grating GRT' and uses all of curvatures in the arc grooves formed in the diffraction grating GRT', as shown in Fig. 11. As a result, the leading sub beam L' and the trailing sub beam T' are symmetrically placed around the main beam M along the track direction, as shown in the middle view of Fig. 12. It will be assumed that the objective lens OL shifts rightward or leftward. In this event, the used region of the laser beam in the diffraction grating GRT' becomes the right-hand region R(R) or the left-hand region R(L) in the diffraction grating GRT' and only uses a part of curvatures in the arc grooves formed in the diffraction grating GRT', as shown in Fig. 11. As a result, the leading sub beam L' and the trailing sub beam T' rotate counterclockwise or clockwise around the main beam M.

At any rate, in the optical pickup unit using the diffraction grating GRT' according to this invention, each of the leading sub beam L' and the trailing sub beam T' has the elliptic spot shape so as to span at least two tracks TR of the optical disk DISC although the objective lens OL shift rightward or leftward.

Fig. 13 shows a diffraction grating GRT" according to another embodiment of this invention and a region of the laser beam where the objective lens OL uses in the diffraction grating GRT". Fig. 14 shows states of spots of the laser beam on the information recording face of the optical disc DISC where the laser beam is converged and irradiated through the objective lens OL in the optical pickup unit comprising the diffraction grating GRT" illustrated in Fig. 13.

The illustrated diffraction grating GRT" has a repetition pattern wherein a plurality of partial arc patterns are symmetrically placed about a center line CL with a lateral direction. Each partial arc pattern has a plurality of arc grooves having the same radius which are equidistantly placed. In other words, the repetition pattern in the diffraction grating GRT" is a pattern so that the partial arc pattern is repeated four times in the lateral direction.

At any rate, the diffraction grating GRT" may have a repetition pattern so that a partial curved pattern is repeated plural times in a predetermined direction. The partial curved pattern has a plurality of curved grooves having the same shape which are equidistantly placed. Accordingly, the partial curved pattern may be a partial hyperbolic pattern having a plurality of hyperbolic grooves which are equidistantly placed or a partial parabolic pattern having a plurality of parabolic grooves are equidistantly placed.

In Fig. 14, a middle view shows a state of spots of the laser beam on the information recording face of the optical disc DISC when the objective lens OL does not shift, a right-hand view shows a state of spots of the laser beam on the information recording face of the optical disc DISC when the objective lens OL shifts the rightward, and a left-hand view shows a state of spots of the laser beam on the information recording face of the optical disc DISC when the objective lens OL shifts the leftward.

As shown in Fig. 12, it is understood that the leading sub beam L' and the trailing sub beam T' are symmetrically placed around the main beam M although the objective lens OL shifts the leftward or the rightward. When the objective lens OL shift the rightward, the leading sub beam L' and the trailing sub beam T' rotates in a counterclockwise around the main beam M. Likewise, when the objective lens OL shifts the leftward, the leading sub beam L' and the trailing sub beam T' rotates in a clockwise around the main beam M.

With the diffraction grating GRT" having such structure, a used region of the laser beam in the diffraction grating GRT" uses all of curvatures of the arc grooves formed in the diffraction grating GRT", as shown in Fig. 13. As a result, the leading sub beam L" and the trailing sub beam T" are always symmetrically placed around the main beam M along the track direction although the objective lens OL shifts leftward or rightward, as shown in Fig. 14.

Now, the description will proceed to a two-wavelength handling optical pickup unit according to another embodiment of this invention. The two-wavelength handling optical pickup unit is a unit to enable to record/reproduce data in/from first and second optical discs having a different track pitch. For instance, the first optical disc may be a DVD and the second optical disc may be a CD. The two-wavelength handling optical pickup unit is similar in structure to the optical pickup unit illustrated in Fig. 6 except for points which will presently be described.

Specifically, the two-wavelength handling optical pickup unit uses a two-wavelength laser (not shown) in place of the laser diode LD and comprises an optical axis correction element between the diffraction grating and the two-wavelength laser and a photodetector which is modified from that illustrated in Fig. 9 as will later become clear.

The two-wavelength laser comprises a semiconductor chip wherein first and second laser diodes are integrated. The first laser diode radiates a first laser beam having a wavelength band of 650 nm for the DVD while the second laser diode radiates a second laser beam having a wavelength band of 780 nm for the CD. The first and the second laser diodes are left with a mutual distance (a distance between emission points) which is, for example, about 110 μm. The first and the second laser diodes can be manufactured in a distance precision of ± 1μm.

The optical axis correction element makes optical axes of the first and the second laser beams coincide to deliver the laser beam to the diffraction grating GRT'.

Figs. 15A and 15B show structure of the photodetector DET' for use in the two-wavelength handling optical pickup unit according to this invention and shapes of the return beam. Fig. 15A shows a received beam pattern in the photodetector DET' when the optical disc is the DVD. Fig. 15B shows a received beam pattern in the photodetector DET' when the optical disc is the CD.

The illustrated photodetector DET' comprises the quadripartite photodiode 31 for receiving the main beam M, a first tripartite photodiode 32A for receiving the leading sub beam L', and a second tripartite photodiode 33A for receiving the trailing sub beam T'.

In addition, the photodetector DET' illustrated in Figs. 15A and 15B shows structure in a case where a focus error signal is generated by using a known astigmatism method using the main beam M.

Inasmuch as the tripartite photodiode is used as a photodiode for receiving the sub beam, it is possible to easily constitute the photodetector DET' suitable for the two-wavelength handling optical pickup unit.

According to the two-wavelength handling optical pickup unit having such structure, no rotation adjustment of the diffraction grating GRT' is required in the manner which is similar to a case of the optical pickup unit described with reference to Figs. 6 through 9. As a result, it is possible to obtain the stable tracking error signal DPP for the optical discs having the different track pitch. Furthermore, it is possible to deal with no adjustment for the optical discs having different standard for the wavelength such as the CD or the DVD.

While this invention has thus far been described in conjunction with a few preferred embodiments thereof, it will now be readily possible for those skilled in the art to put this invention into various other manners. That is, although the above-mentioned embodiments describe about cases where this invention is applied to a one-wavelength handling optical pickup unit and the two-wavelength handling optical pickup unit, this invention may be applicable to optical pickup units which enable to hand with three or more wavelengths. In addition, this invention may be applicable to an optical pickup unit which enables to deal with two or more types of optical discs having different track pitch and using the same wavelength such as a DVD-RAM which has a track pitch different from those of a DVD-R, a DVD-RW, and a DVD+RW. In addition, although the above-mentioned two-wavelength handling optical pickup unit comprises the two-wavelength laser as the optical source, the two-wavelength handling optical unit may comprise a first laser diode for radiating a first laser beam and a second laser diode for radiating a second laser beam, independently. Under the circumstances, a beam splitter may be used as the optical axis correction element. Furthermore, the diffraction gratings are not restricted to those illustrated in Figs. 7, 11, and 13. At any rate, the diffraction grating may has any structure so that each of the first and the second sub beams on the optical disc has an ellipse spot shape which becomes longer in a radial direction of the optical disc and which spans at least two tracks.

## Claims

1. A diffraction grating (GRT' ; GRT") for separating an incident beam from an optical source (LD) into a main beam (M) and first and second sub beams (L', T' ; L", T"), wherein each of said first and said second sub beams has, in use, on an optical disc (DISC), an elliptic spot shape which becomes longer in a radial direction of the optical disc and which, in use, spans at least two tracks (TR), the diffraction grating being **characterized by** having at least one curved pattern consisting of a plurality of curved grooves having the same radius, wherein the center of said curved grooves are equidistantly placed along a predetermined direction of said grating.

2. A diffraction grating (GRT' ; GRT") for separating an incident beam from an optical source (LD) into a main beam (M) and first and second sub beams (L', T' ; L", T"), wherein each of said first and said second sub beams has, in use, on an optical disc (DISC), an elliptic spot shape which becomes longer in a radial direction of the optical disc and which, in use spans at least two tracks (TR), the diffraction grating being **characterized in that** said diffraction grating (GRT") has a repetition pattern so that a partial curved pattern is repeated plural times in a predetermined direction, said partial curved pattern consisting of a plurality of curved grooves having same radius, wherein the center of said curved grooves are equidistantly placed along a predetermined direction of said grating.

3. A combination of an optical disc and an optical pickup unit comprising a diffraction grating according to any preceding claim.

4. A combination of an optical disc and an optical pickup unit according to claim 3, wherein the optical pickup unit is a multiple wavelength handling unit enabled to record or reproduce, in use, to first and second optical discs having different track pitches, said optical pickup unit further comprising a photodetector for detecting a return beam reflected by each of the first and a second optical disc, said photodetector (DET') comprises a quadripartite photodiode (31) for receiving said main beam (M), a first tripartite photodiode (32A) for receiving said first sub beam (L') and a second tripartite photodiode (33A) for receiving said second sub beam (T').

## Patentansprüche

1. Beugungsgitter (GRT'; GRT") zum Trennen eines einfallenden Strahls von einer optischen Quelle (LD) in einen Hauptstrahl (M) und erste und zweite Nebenstrahlen (L', T; L", T"), wobei jeder der ersten und zweiten Nebenstrahlen im Gebrauch auf einer optischen Platte (DISC) eine elliptische Fleckform aufweist, die in einer radialen Richtung der optischen Platte länger wird und die im Gebrauch wenigstens zwei Spuren (TR) überspannt, wobei das Beugungsgitter **dadurch gekennzeichnet ist, dass** es wenigstens ein Bogenmuster aufweist, das aus einer Vielzahl von bogenförmigen Rillen besteht, die den gleichen Radius aufweisen, wobei das Zentrum der bogenförmigen Rillen entlang einer bestimmten Richtung des Gitters äquidistant angeordnet ist.

2. Beugungsgitter (GRT'; GRT") zum Trennen eines einfallenden Strahls von einer optischen Quelle (LD) in einen Hauptstrahl (M) und erste und zweite Nebenstrahlen (L', T"; L", T"), wobei jeder der ersten und zweiten Nebenstrahlen im Gebrauch auf einer optischen Platte (DISC) eine elliptische Fleckform aufweist, die in einer radialen Richtung der optischen Platte länger wird und die im Gebrauch wenigstens zwei Spuren (TR) überspannt, wobei das Beugungsgitter **dadurch gekennzeichnet ist, dass** das Beugungsgitter (GRT") ein Wiederholungsmuster derart aufweist, dass ein bogenförmiges Teilmuster mehrmals in einer bestimmten Richtung wiederholt wird, wobei das bogenförmige Teilmuster aus einer Vielzahl von bogenförmigen Rillen besteht, die den gleichen Radius aufweisen, wobei das Zentrum der bogenförmigen Rillen entlang einer bestimmten Richtung des Gitters äquidistant angeordnet ist.

3. Kombination aus einer optischen Platte und einer optischen Lesekopfeinheit, die ein Beugungsgitter nach einem der vorherigen Ansprüche umfasst.

4. Kombination aus einer optischen Platte und einer optischen Lesekopfeinheit nach Anspruch 3, wobei die optische Lesekopfeinheit eine Multiwellenlängen-Verarbeitungseinheit, die in der Lage ist, im Gebrauch auf eine erste und zweite optische Platte aufzuzeichnen oder zu kopieren, die unterschiedliche Spurabstände aufweisen, wobei die optische Lesekopfeinheit darüber hinaus einen Photodetektor zum Erfassen eines Rückstrahls umfasst, der jeweils von der ersten oder zweiten optischen Platte reflektiert wird, wobei der Photodetektor (DET') eine vierteilige Photodiode (31) zum Empfangen des Hauptstrahl (M), eine erste dreiteilige Photodiode (32A) zum Empfangen des ersten Nebenstrahls (L') und eine zweite dreiteilige Photodiode (33A) zum Empfangen des zweiten Nebenstrahls (T') umfasst.

**Revendications**

1. Réseau de diffraction (GRT' ; GRT") pour diviser un faisceau incident provenant d'une source optique (LD) en un faisceau principal (M) ainsi qu'en un premier et un second sous-faisceau (L', T' ; L", T"), selon lequel

   le premier et le second sous-faisceau forment chacun, en fonctionnement, un point de forme elliptique sur un disque optique (DISC), allongé dans la direction radiale du disque optique et qui, en fonctionnement, chevauche au moins deux pistes (TR),
   **caractérisé en ce que**
   le réseau de diffraction présente au moins une forme courbe composée d'un ensemble de sillons ayant le même rayon et les centres des sillons courbes sont répartis de façon équidistante le long d'une direction prédéfinie du réseau.

2. Réseau de diffraction (GRT' ; GRT") pour diviser un faisceau incident provenant d'une source optique (LD) en un faisceau principal (M) ainsi qu'en un premier et un second sous-faisceau (L', T' ; L", T"), selon lequel

   le premier et le second sous-faisceau forment chacun, en fonctionnement, un point de forme elliptique sur un disque optique (DISC), allongé dans la direction radiale du disque optique et qui, en fonctionnement, chevauche au moins deux pistes (TR),
   **caractérisé en ce que**
   le réseau de diffraction (GRT") a un motif de répétition de façon qu'un schéma partiellement courbe soit répété plusieurs fois dans une direction prédéfinie, ce schéma courbe étant formé d'un ensemble de sillons courbes ayant le même rayon et les centres des sillons courbes sont répartis de façon équidistante le long d'une direction prédéfinie du réseau.

3. Combinaison d'un disque optique et d'un lecteur optique formé d'un réseau de diffraction selon les revendications précédentes.

4. Combinaison d'un disque optique et d'un lecteur optique selon la revendication 3, selon lequel
   le lecteur optique est une unité de traitement à longueurs d'ondes multiples permettant d'enregistrer ou de lire en fonctionnement, le premier et le second disque optique ayant des pas de piste différents, le lecteur optique comportant en outre un photodétecteur pour détecter le faisceau de retour réfléchi par le premier et le second disque optique, le photodétecteur (DET') ayant une photodiode (31) en quatre parties pour recevoir le faisceau principal (M), une première photodiode tripartite (32A) pour recevoir le premier sous-faisceau (L') et une seconde photodiode tripartite (33A) pour recevoir le second sous-faisceau (T').

# FIG. 1

PRIOR ART

GRT

FIG. 2  PRIOR ART

FIG. 3  PRIOR ART

**FIG. 4** PRIOR ART

**FIG. 5A**
PRIOR ART

**FIG. 5B**
PRIOR ART

**FIG. 5C**
PRIOR ART

**FIG. 5D**
PRIOR ART

FIG. 6

GRT'

# FIG. 7

L'

M

T'

TR

# FIG. 8

32    31  M    DET  33

L'              T'

# FIG. 9

FIG. 10A ——————— PPL ———————

FIG. 10B ——— PPM ———

FIG. 10C ——————— PPT ———————

FIG. 10D ——— DPP ———

FIG. 11

FIG. 12

**FIG. 13**

**FIG. 14**

EP 1 600 958 B1

FIG. 15A

32A — L' 31 T' DET' 33A
M

FIG. 15B

32A — 31 DET' 33A
M
L' T'

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08221774 A
- JP 8221774 A
- JP 2001195767 A
- US 6370092 B
- US 6738326 B
- EP 0621590 A